# EUROPÄISCHE PATENTSCHRIFT

(11) **EP 1 659 028 B1**
(45) Veröffentlichungstag und Bekanntmachung des Hinweises auf die Patenterteilung: **21.01.2009**
(21) Anmeldenummer: 05025203.0
(22) Anmeldetag: 18.11.2005
(51) Int. Cl.: B60Q 1/12, B60Q 1/18, B60Q 1/14

(54) **Kraftfahrzeug mit einer Beleuchtungseinrichtung umfassend ein Steuergerät und ein über das Steuergerät zum Ausleuchten einer Kurve in Abhängigkeit des über einen Lenkwinkelsensor erfassten Lenkwinkes ansteuerbares Leuchtmittel**
Vehicle with a lighting device comprising a controller and a lighting device for illuminating a curve, which is controlled by the controller in dependance on the steering angle detected by a steering sensor
Véhicule avec dispositif d'éclairage utilisant un dispositif de commande et un dispositif d'éclairage pour un virage commandé par le dispositif de commande dépendant de l'angle de braquage détecté par un capteur d'angle de direction

(30) Priorität: 19.11.2004 DE 102004055883
(43) Veröffentlichungstag der Anmeldung: 24.05.2006
(73) Patentinhaber: AUDI AG, 85045 Ingolstadt (DE)
(72) Erfinder: Kenn, Christoph, 53489 Sinzig (DE); Berlitz, Stephan, 86529 Schrobenhausen (DE); Spreitzer, Christian, 85051 Ingolstadt (DE); Pfeil, Martin, 85080 Gaimersheim (DE)
(74) Vertreter: Thielmann, Frank

(56) Entgegenhaltungen:
- DE-A1- 10 007 984
- DE-A1- 10 104 773
- DE-A1- 10 139 152
- DE-A1- 19 815 414
- US-B1- 6 406 172

## Beschreibung

Die Erfindung betrifft ein Kraftfahrzeug mit einer Beleuchtungseinrichtung umfassend ein Steuergerät und ein über das Steuergerät zum Ausleuchten einer Kurve in Abhängigkeit des über einen Lenkwinkelsensor erfassten Lenkwinkels ansteuerbares Leuchtmittel, wobei das Leuchtmittel mehrere Lichtquellen umfasst, die in unterschiedliche Richtungen ausgerichtet sind und unterschiedliche, einander ergänzende Bereiche ausleuchten, und die über das Steuergerät in Abhängigkeit des Lenkwinkels zeitlich nacheinander zuschaltbar sind, wobei das Steuergerät für ein Variieren der Helligkeit einer zugeschalteten Lichtquelle von einer minimalen zu einer maximalen Helligkeit in Abhängigkeit des erfassten Lenkwinkels ausgebildet ist.

Kraftfahrzeuge mit einem derartigen, häufig auch "Kurvenlicht" genannten zusätzlichen Leuchtmittel sind bekannt und kommen zunehmend in Verkehr. Über das Leuchtmittel ist es möglich, einen Kurvenbereich weiter auszuleuchten als dies mit den normalen Frontscheinwerfern möglich ist. Zu diesem Zweck ist in jedem Frontscheinwerfer ein Leuchtmittel umfassend eine Lichtquelle, beispielsweise in Form einer üblichen Glühlampe oder in Form eines LED-Panels angeordnet, das unter einem bestimmten Winkel zur Fahrzeuglängsachse zur Seite hin gerichtet angeordnet ist. Wird nun über einen Lenkwinkelsensor, der die Bewegung des Lenkrads bzw. der Lenksäule überwacht, erfasst, dass eine Kurve an- bzw. in eine solche eingefahren wird, erfolgt über ein Steuergerät, dem der erfasste Lenkwinkel gegeben wird, die Ansteuerung des Leuchtmittels, so dass der seitliche Kurvenbereich ausgeleuchtet wird.

Ein solches Kurvenlichtsystem ist jedoch starr, d. h., das Kurvenlicht leuchtet unabhängig von der tatsächlich gegebenen Fahrsituation stets den gleichen Kurvenbereich aus. Das heißt, unabhängig davon, wie stark nun der Lenkeinschlag ist, bleibt es stets bei der einmal angesteuerten, invarianten Ausleuchtung.

Die DE 101 04 773 A1 beschreibt ein Beleuchtungssystem für Fahrzeuge, das mehrere Lichtregelungsleuchten, einen Lenksensor und eine elektronische Steuereinheit aufweist. Die Lichtregelungsleuchten weisen unterschiedliche Beleuchtungsbereiche auf und ihre Lichtmenge wird in Abhängigkeit vom Lenkwinkel reguliert.

Der Erfindung liegt das Problem zugrunde, ein Kraftfahrzeug mit einer verbesserten variablen Kurvenausleuchtung anzugeben.

Zur Lösung dieses Problems ist bei einem Kraftfahrzeug der eingangs genannten Art erfindungsgemäß vorgesehen, dass das Steuergerät zum Variieren des zum Zuschalten einer nachfolgenden Lichtquelle zu durchlaufenden Lenkwinkelintervalls und des zum Verändern der Helligkeit zu durchlaufenden Lenkwinkelintervalls in Abhängigkeit der Ist-Geschwindigkeit ausgebildet ist.

Das erfindungsgemäße Kraftfahrzeug zeichnet sich durch ein dynamisches Kurvenlicht aus, das eine Kurvenausleuchtung in Abhängigkeit der tatsächlichen Fahrsituation ermöglicht. Das Leuchtmittel umfasst mehrere, beispielsweise drei separate Lichtquellen in Form einzelner Glühlampen, LED's oder jeweils mehrere LED's umfassenden LED-Panels, die in der Einbaustellung in unterschiedliche Richtungen bzw. in unterschiedlichen Winkeln bezogen zur Fahrzeuglängsachse zur Seite hin ausgerichtet sind. Die jeweils emittierten Lichtfächer oder -keulen sind dabei im Fächerwinkel so ausgelegt, dass sie einander überlappen. Die Ansteuerung der einzelnen Lichtquellen erfolgt nun erfindungsgemäß in Abhängigkeit des erfassten Lenkwinkels. Wird das Lenkrad aus der 0°-Stellung beispielsweise nach rechts gedreht, so wird bei Erreichen eines ersten Grenzwinkels die erste Lichtquelle, die unter dem kleinsten Winkel zur Fahrzeuglängsachse steht, angeschalten. Der mit dem eingeschlagenen Lenkwinkel korrespondierende Kurvenradius ist, nachdem der Lenkwinkel klein ist, relativ groß, so dass eine geringere Ausleuchtung zur Seite hin ausreichend ist. Wird nun das Lenkrad weitergedreht, so wird ab Erreichen eines zweiten Grenzwinkels die zweite Lichtquelle zusätzlich zur ersten zugeschalten, nachdem dann davon ausgegangen werden kann, dass eine Kurve mit einem kleineren Radius, die einer weiteren Ausleuchtung bedarf, befahren wird. Entsprechend wird die dritte Lichtquelle zugeschalten, wenn das Lenkrad noch weiter nach rechts gedreht wird. Selbstverständlich sind auch mehr als die beispielsweise erwähnten drei Lichtquellen verwendbar.

Dabei ist das Steuergerät für ein Variieren der Helligkeit einer zugeschalteten Lichtquelle von einer minimalen zu einer maximalen Helligkeit in Abhängigkeit des erfassten Lenkwinkels sowie zum Variieren des zum Verändern der Helligkeit zu durchlaufenden Lenkwinkelintervalls in Abhängigkeit der Ist-Geschwindigkeit ausgebildet. Demgemäß wird also nicht nur der zeitliche Zuschaltbetrieb geschwindigkeitsabhängig variiert, sondern auch das Aufdimmverhalten der einzelnen Lichtquellen, die zwischen einer minimalen Helligkeit im Moment des Zuschaltens und einer maximalen Helligkeit variiert werden können. Wird also beispielsweise bei niedrigerer Geschwindigkeit anhand eines schmaleren Lenkwinkelintervalls schneller zugeschalten, wird gleichermaßen auch anhand eines schmaleren, der Helligkeitssteuerung zugrunden Lenkwinkelintervalls schneller aufgedimmt, und umgekehrt.

Die weiterhin erfindungsgemäß vorgesehene Variation des für ein Zuschalten einer nachfolgenden Lichtquelle zu durchlaufenden Lenkwinkelintervalls in Abhängigkeit der tatsächlich gefahrenen Ist-Geschwindigkeit ermöglicht eine weitere dynamische Anpassung an die tatsächlichen Fahrgegebenheiten. Hierüber kann dem Umstand Rechnung getragen werden, dass je schneller ein Fahrzeug fährt, in der Regel der befahrene Kurvenradius um so größer ist, woraus resultiert, dass ein seitliches Ausleuchten eines geringeren Bereichs ausreichend ist, als bei Befahren einer sehr eng gezogenen Kurve, die in der Regel mit einer deutlich niedrigeren Geschwindigkeit befahren wird. Fährt das Fahrzeug also langsam, wird erfindungsgemäß ein kleines Lenkwinkelintervall verwendet, so dass bei Verändern des Lenkwinkels ein relativ schnelles Zuschalten der einzelnen Lichtquellen nacheinander erfolgt, während bei höheren Geschwindigkeiten größere Intervalle seitens des Steuergeräts definiert werden, so dass ein zeitlich gesehen langsameres Zuschalten bei gleicher Winkeländerung erfolgt.

Insgesamt ergibt sich hieraus eine der Ist-Situation angepasste Dynamik des Kurvenlichts, das angepasst an die individuelle Fahrsituation variabel zuschaltbar ist.

Das Steuergerät kann zum Variieren des zu durchlaufenden Lenkwinkelintervalls innerhalb eines vorbestimmten Geschwindigkeitsintervalls ausgebildet sein. Das heißt, es ist steuergeräteseitig ein bestimmtes Geschwindigkeitsintervall definiert, innerhalb welchem überhaupt eine Variation des Lenkwinkelintervalls nötig ist. Außerhalb dieses Geschwindigkeitsintervalls, wenn das Fahrzeug also langsamer oder schneller fährt, wird stets mit einem konstanten Lenkwinkelintervall geschaltet. Das Geschwindigkeitsintervall kann beispielsweise 5-90 km/h, insbesondere 10-70 km/h betragen. Das Lenkwinkelintervall selbst, das für das Zuschalten einer weiteren Lichtquelle durchlaufen werden muss, kann in seiner Breite zwischen 50° - 170°, insbesondere zwischen 70° - 150° variiert werden.

Das Steuergerät selbst kann dabei zur linearen Änderung des Lenkwinkelintervalls in Abhängigkeit der Fahrzeuggeschwindigkeit ausgebildet sein, alternativ ist aber auch eine nicht-lineare Änderung möglich. Diese kann beispielsweise derart realisiert sein, dass bei niedrigeren Geschwindigkeiten eine langsamere Intervallvergrößerung erfolgt, die mit zunehmender Geschwindigkeit ansteigt.

Dabei kann das für eine Helligkeitsänderung von der minimalen zur maximalen Helligkeit zu durchlaufende Lenkwinkelintervall stets gleich dem für das Zuschalten der nachfolgenden Lichtquelle zu durchlaufenden Lenkwinkelintervall sein. Alternativ kann das Helligkeits-Lenkwinkelintervall auch größer oder kleiner als das Zuschalt-Lenkwinkelintervall, jedoch in einem festen Verhältnis zueinander stehen, sein. Es kann hiernach also beispielsweise schneller zugeschalten werden, als eine vorher zugeschaltete Lichtquelle bis zur maximalen Helligkeit aufgedimmt wird, umgekehrt kann eine bereits zugeschaltete Lichtquelle schneller auf 100 % Helligkeit aufgedimmt werden, als die nachfolgende zugeschaltet wird. Sind also bei gleichen Lenkwinkelintervallen die Zuschaltänderung und die Helligkeitsänderung noch miteinander gekoppelt, bieten die beiden Alternativlösungen eine Möglichkeit, die Helligkeitsänderung vom Zuschaltbetrieb quasi zu entkoppeln.

Um zu vermeiden, dass ein Kurvenlicht bereits bei einer minimalen Lenkradverdrehung ausgehend von der 0°-Stellung zugeschaltet wird, ist zweckmäßigerweise ein Grenzlenkwinkel definiert, ab dem die erste Lichtquelle zugeschaltet werden kann. Dieser für das Zuschalten der ersten Lichtquelle zu erreichende Lenkwinkel sollte zwischen 50° und 90°, insbesondere 70° betragen. Das heißt, erst wenn eine Lenkradverdrehung um beispielsweise 70° erfolgt ist, erfolgt die Zuschaltung der ersten Lichtquelle.

Wie beschrieben, sind zweckmäßigerweise wenigstens drei Lichtquellen vorzusehen, es können aber auch mehr Lichtquelle angeordnet werden. Die primären Abstrahlrichtungen sollten unter einem Winkel von 15° bis 25°, insbesondere von ca. 20° zueinander stehen. Der Winkel kann um so kleiner gewählt werden, je mehr separat ansteuerbare Lichtquellen vorgesehen sind. Sind aber beispielsweise nur zwei separate Lichtquellen vorgesehen, so kann auch ein Winkel > 25°, beispielsweise 30° oder 35°, gewählt werden.

Um sicherzustellen, dass die Lichtfächer oder Lichtkegel auch hinreichend überlappen, sollte der Öffnungswinkel des abgestrahlten Lichtkegels zwischen 20° und 35°, insbesondere zwischen 25° und 30° betragen. Je größer der Winkel, den die primären Abstrahlrichtungen der Lichtquellen zueinander einnehmen, ist, um so größer ist zwangsläufig auch der Öffnungswinkel zu wählen, und umgekehrt, um ein hinreichendes Überlappen sicherzustellen.

Die Lichtquellen können wie beschrieben einzelne Glühlampen sein, bevorzugt werden aber eine oder mehrere LED's eingesetzt, wobei die mehreren LED's als Modul gemeinsam ansteuerbar sind. Ein LED-Modul kann beispielsweise vier separate LED's umfassen.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines erfindungsgemäßen Kraftfahrzeugs zur Erläuterung der Funktion der dynamisch erfolgenden Kurvenausleuchtung,
- Fig. 2: eine Prinzipdarstellung eines Frontscheinwerfers mit drei in unterschiedlichen Positionen angeordneten Lichtquellen,
- Fig. 3a - c: drei Diagramme zur Darstellung des Zuschaltbetriebs sowie der Helligkeitsvariierung in Abhängigkeit des Lenkwinkels,
- Fig. 4: eine Prinzipdarstellung einer erfindungsgemäßen Beleuchtungseinrichtung samt Steuergerät und Lenkwinkelsensor,
- Fig. 5: ein Diagramm zur Darstellung der Änderung des Zuschalt-Lenkwinkelintervalls in Abhängigkeit der Geschwindigkeit,
- Fig. 6: ein Diagramm zur Darstellung der Lichtquellenzuschaltung in Abhängigkeit des Lenkwinkels bei einer Geschwindigkeit von 25 km/h, und
- Fig. 7: ein Diagramm zur Darstellung der Lichtquellenzuschaltung in Abhängigkeit des Lenkwinkels bei einer Geschwindigkeit von 65 km/h.

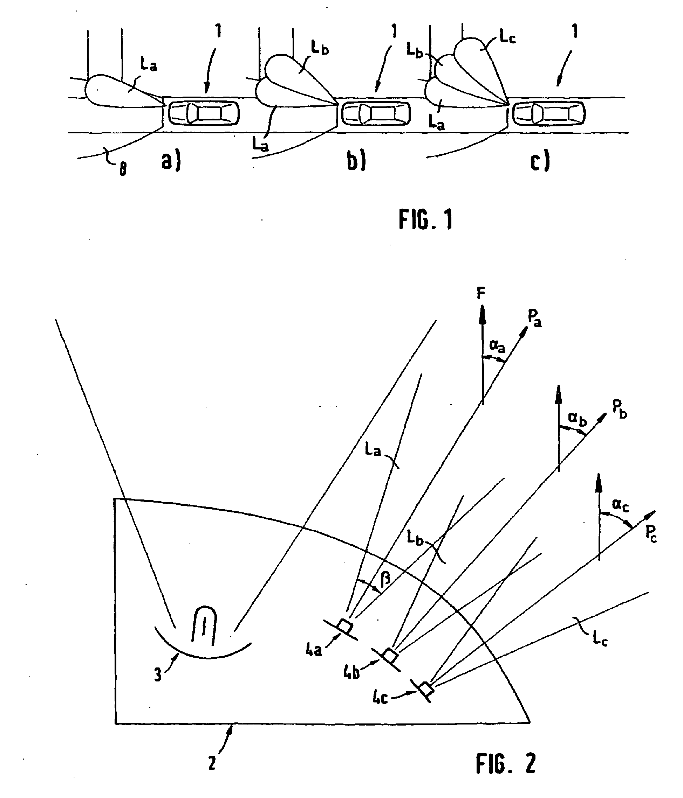

Fig. 1 zeigt ein erfindungsgemäßes Kraftfahrzeug 1, das links- und rechtsseitig jeweils einen Frontscheinwerfer, wie er exemplarisch in Fig. 2 dargestellt ist, aufweist, in unterschiedlichen Betriebssituationen. Der Frontscheinwerfer 2 besitzt zum einen eine erste Lichtquelle 3, die das übliche Abblendlicht emittiert. Darüber hinaus sind im gezeigten Beispiel drei separate Lichtquellen 4a, 4b und 4c vorgesehen, bei denen es sich beispielsweise um jeweils eine LED oder um mehrere einzelne LED's umfassende LED-Panel handelt. Ersichtlich sind die einzelnen Lichtquellen 4a - c in unterschiedlichen Winkeln zur Fahrzeuglängsachse ausgerichtet, so dass ihre jeweiligen primären Abstrahlrichtungen Pₐ, P_{b}, P_{c} unter immer größer werdenden Winkeln αₐ, α_{b}, α_{c} zur Fahrzeuglängsachse F stehen. Die jeweils abgestrahlten Lichtfächer Lₐ, L_{b}, L_{c} sind von ihrem jeweiligen Öffnungswinkel β, der bevorzugt für alle Lichtquellen a - c gleich ist, so ausgelegt, dass sich die Lichtfächer Lₐ und L_{b} bzw. L_{b} und L_{c} überlappen.

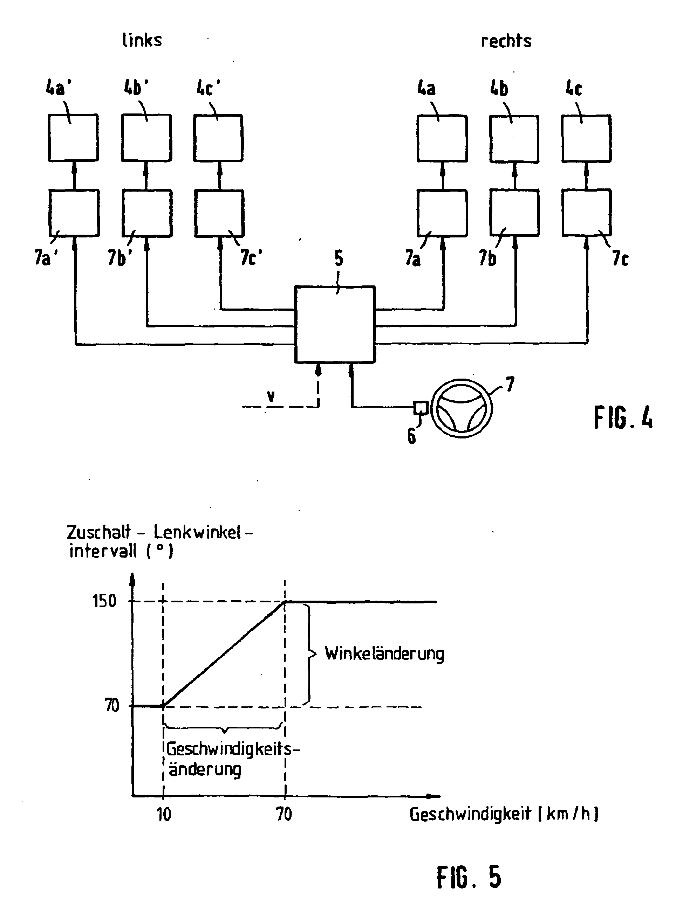

Die einzelnen Lichtquellen 4a, 4b und 4c sind über ein zentrales Steuergerät 5 separat ansteuerbar. Das Steuergerät 5 kommuniziert zum einen mit einem Lenkwinkelsensor 6, der den Verdrehwinkel γ eines Lenkrads 7 oder einer Lenksäule erfasst. In Abhängigkeit des Lenkwinkels steuert das Steuergerät 5 die jeweilige Ansteuerelektronik 7a, 7b und 7c der in Fig. 4 gezeigten, dem rechten Scheinwerfer 2 zugeordneten Lichtquellen 4a, 4b und 4c bzw. die Ansteuerelektronik 7a', 7b' und 7c' der gemäß Fig. 4 dem linken Scheinwerfer zugeordneten Lichtquellen 4a', 4b' und 4c'.

Hierdurch ist es möglich, in Abhängigkeit des Lenkwinkels eine gestufte, dynamische Ausleuchtung einer Kurve zu realisieren, wie dies in Fig. 1a - 1c dargestellt ist. In Fig. 1a ist zum einen das Abblendlicht (Lichtquellen 3) eingeschalten, wie durch den Lichtkegel 8 dargestellt ist. Darüber hinaus wurde aufgrund einer hinreichenden Verdrehung des Lenkrads 7 und einer entsprechenden Erfassung des Lenkradwinkels beim rechten Scheinwerfer 2 die erste Lichtquelle 4a angesteuert, dies ist durch den Lichtfächer Lₐ in Fig. 1a dargestellt. Bei einem weiteren Verdrehen des Lenkrads 7 und nach Durchlaufen eines definierten Lenkwinkelintervalls wird, wie in Fig. 1b dargestellt ist, die zweite Lichtquelle 4b zugeschalten, diese emittiert den Lichtfächer L_{b}, wie gezeigt. Dieser überlappt wie beschrieben mit dem Lichtfächer Lₐ.

Bei einer weiteren Verdrehung wird bei Erreichen des Zuschaltwinkels die dritte Lichtquelle 4c angesteuert, die den Lichtfächer L_{c} zusätzlich zu den beiden anderen Lichtfächern emittiert. Der Lichtfächer Lc überlappt mit dem Lichtfächer L_{b}. Die Öffnungswinkel der Lichtfächer betragen beispielsweise 25°, worüber bei entsprechender Wahl der einzelnen primären Absteuerrichtungen eine hinreichende Überlappung möglich ist.

Über die Steuerungseinrichtung 5 erfolgt nicht nur der zeitlich gestaffelte lenkwinkelabhängige Zuschaltbetrieb, sondern auch die entsprechende Steuerung der Helligkeitsveränderung einer zugeschalteten Lichtquelle. Hierzu steuert die Steuerungseinrichtung 5 die jeweilige Ansteuerelektronik 7a - 7c bzw. 7a' - c'. Die Helligkeitsvariierung erfolgt durch Pulsweitenmodulation der entsprechenden Signale, die an die jeweilige Ansteuerelektronik bzw. von dieser an die jeweilige Lichtquelle gegeben werden.

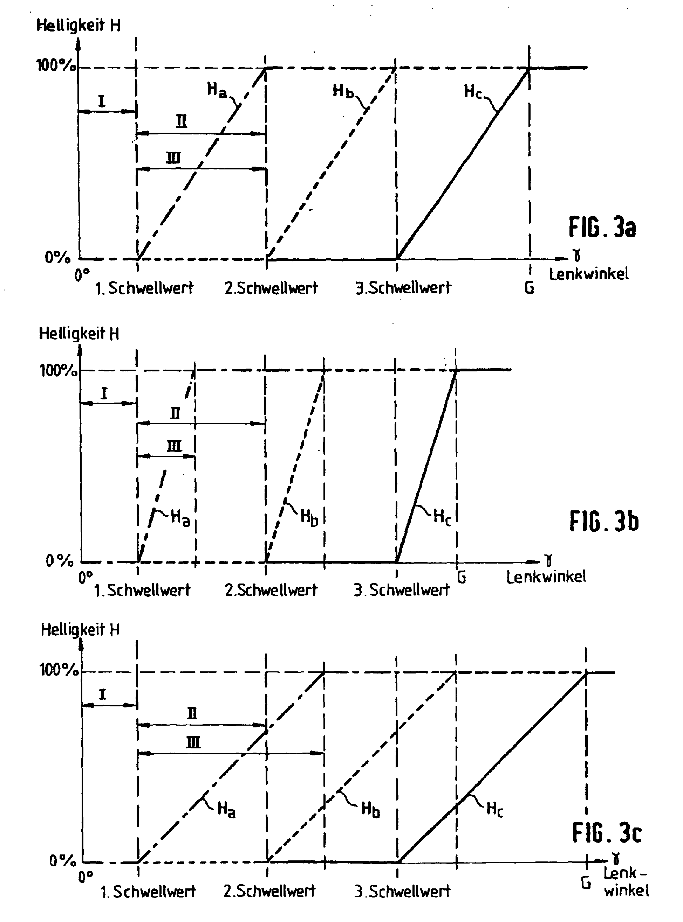

Die Figuren 3a - 3c zeigen Diagramme, die den Zusammenhang zwischen dem Lenkwinkel γ und dem Zuschaltzeitpunkt sowie der Helligkeitsveränderung darstellen. Längs der Abszisse ist der Lenkwinkel γ aufgetragen, längs der Ordinate die Helligkeit H variierend von 0% bis 100%.

Ausgehend von einem Lenkwinkel von 0° wird im gezeigten Beispiel das Lenkrad verdreht, bis ein erster Schwellwert, der Mindestlenkwinkel erreicht ist. Dieser beträgt beispielsweise 70°. Das Mindestlenkwinkelintervall 0° - 70° ist durch das Intervall I dargestellt. Mit Erreichen dieses ersten Schwellwerts wird ausgehend vom Beispiel gemäß Fig. 2 die erste Lichtquelle 4a zugeschalten. Mit weiterem Verdrehen des Lenkrads und damit weiterer Zunahme des Lenkwinkels wird nun gemäß der Kurve Hₐ die Helligkeit der Lichtquelle 4a gesteigert, wobei hier eine lineare Helligkeitszunahme dargestellt ist. Das heißt, je weiter das Lenkrad verdreht wird, desto stärker dimmt die Lichtquelle 4a auf. Die Helligkeitszunahme kann aber auch nicht-linear gesteuert werden.

Sobald das Zuschalt-Lenkwinkelintervall II, das sich vom ersten Schwellwert bis zu einem zweiten Schwellwert erstreckt, durchlaufen ist, wird mit Erreichen des zweiten Schwellwerts die zweite Lichtquelle 4b zugeschalten. Die Helligkeitsveränderung der Lichtquelle 4a ist zu diesem Zeitpunkt gerade abgeschlossen, d. h., mit Erreichen des zweiten Schwellwert-Lenkwinkels wird die Lichtquelle 4a mit 100% betrieben. D.h., das Helligkeits-Lenkwinkelintervall III ist gleich dem Zuschalt-Lenkwinkelintervall II. Sie bleibt auf 100%, während mit zunehmender Erhöhung des Lenkwinkels, wie durch die Kurve H_{b} dargestellt ist, auch linear die Lichtquelle 4b aufgedimmt wird. Ist das zweite Zuschalt-Lenkwinkelintervall, das sich vom zweiten Schwellwert zum dritten Schwellwert erstreckt und gleich groß ist wie das Zuschalt-Lenkwinkelintervall zwischen dem ersten Schwellwert und dem zweiten Schwellwert, durchlaufen, hat auch die zweite Lichtquelle 4b zu 100% ihre Helligkeit erreicht, gleichzeitig wird mit Erreichen es dritten Schwellwerts die dritte Lichtquelle 4c zugeschalten, die mit zunehmender Lenkwinkelerhöhung gemäß der Kurve H_{c} immer heller angesteuert wird, bis auch sie bei Erreichen des Grenzwinkels G 100% erreicht. Es leuchten dann alle Lichtquellen 4a - c mit 100%.

Sei im Beispiel gemäß Fig. 3a angenommen, dass ein Zuschalt-Lenkwinkelintervall II 100° beträgt, so wäre bei Erreichen des Grenzwinkels G das Lenkrad um insgesamt 370° verdreht worden. Im Beispiel gemäß Fig. 3a entspricht das Zuschalt-Lenkwinkelintervall II dem Helligkeits-Lenkwinkelintervall III, d. h., dass das Intervall ausgehend von einer minimalen Lichtquellenhelligkeit (0%) bis zum Erreichen der maximalen Lichtquellenhelligkeit (100%) dem Zuschaltintervall entspricht, beide betragen beispielsweise 100°.

Fig. 3b zeigt die Situation, in der die Intervalle II und III nicht gleich groß sind. Ausgehend von einem Intervall I, das auch hier beispielsweise 70° beträgt, wird bei Erreichen des ersten Schwellwerts die Lichtquelle 4a zugeschalten. Die Zunahme der Helligkeit von minimal 0% auf maximal 100% erfolgt hier jedoch wesentlich schneller, d. h., das Helligkeits-Lenkwinkelintervall III ist deutlich kürzer als das Zuschalt-Lenkwinkelintervall II, das durchlaufen werden muss, bis die zweite Lichtquelle 4b zugeschalten wird. Das Zuschalt-Lenkwinkelintervall II läuft auch hier vom ersten Schwellwert zum zweiten Schwellwert und beträgt beispielsweise 100°, während das Helligkeits-Lenkwinkelintervall III beispielsweise nur 40° beträgt. Ist das Helligkeits-Lenkwinkelintervall III durchlaufen, so leuchtet die Lichtquelle 4a mit 100% Helligkeit, während noch weitere ca. 60° zu durchlaufen sind, bis bei Erreichen des zweiten Schwellwerts die zweite Lichtquelle 4b zugeschalten wird. Diese dimmt dann entsprechend schnell auf, wie auch hier durch die im Vergleich zur Figur 3a wesentlich steilere Helligkeitskurve H_{b} gezeigt ist. Auch hier leuchtet die Lichtquelle 4b schon längere Zeit mit 100%, wenn der dritte Schwellwert erreicht wird und die dritte Lichtquelle 4c zugeschalten wird.

Nachdem bei diesem Beispiel die Lichtquellen deutlich schneller aufgedimmt werden als die Zuschaltung erfolgt, ist hier der Grenzwinkel G, ab dem alle drei Lichtquellen mit 100% leuchten kleiner als der Grenzwinkel G gemäß Figur 3a.

Entsprechend umgekehrt ist der zeitliche Schaltbetrieb und Helligkeitsverlauf gemäß Beispiel nach Figur 3c. Ist das Lenkwinkelintervall I, auch hier beispielsweise 70%, durchlaufen, wird die erste Lichtquelle 4a zugeschalten. Der Helligkeitsanstieg erfolgt hier jedoch wesentlich langsamer verglichen mit der synchronen Situation gemäß Figur 3a, wie durch die Kurve Hₐ dargestellt ist. Die Helligkeit liegt bei ca. 70%, wenn das Zuschalt-Lenkwinkelintervall II durchlaufen ist und der zweite Schwellwert erreicht ist, wenn also die zweite Lichtquelle 4b zugeschalten wird. Eine weitere Erhöhung des Lenkwinkels führt dazu, dass die Lichtquelle 4a noch weiter bis auf 100% aufgedimmt wird, während parallel dazu die Lichtquelle 4b aufgedimmt wird. Erst wenn das Helligkeits-Lenkwinkelintervall III durchlaufen ist, leuchtet die Lichtquelle 4a zu 100%, während in diesem Fall die Lichtquelle 4b bereits mit ca. 30% ihrer maximalen Helligkeit leuchtet. Eine weitere Lenkwinkelerhöhung führt zu einer weiteren Helligkeitszunahme der Lichtquelle 4b, wobei mit Erreichen des dritten Schwellwerts und damit nach Durchlaufen des zugehörigen Zuschalt-Lenkwinkelintervalls II die Lichtquelle 4c zugeschalten wird. Auch in diesem Fall hat die Lichtquelle 4b noch nicht ihre 100% Helligkeit erreicht, eine nachfolgende Lenkwinkelerhöhung führt zu einer parallelen Erhöhung der Helligkeit sowohl der Lichtquelle 4b als auch der Lichtquelle 4c. Erst mit Erreichen des Grenzwinkels G, der größer als der Grenzwinkel G gemäß Figur 3a ist, leuchten alle drei Lichtquellen mit 100% Helligkeit.

Ersichtlich lässt das erfindungsgemäße Kurvenlicht eine dynamische Ausleuchtung mit dynamischer Helligkeitsvariierung zu. Dieser erfindungsgemäße Schaltbetrieb ist zweckmäßigerweise nur bei geringeren Fahrgeschwindigkeiten, beispielsweise < 70km/h, möglich. Bei größeren Fahrgeschwindigkeiten wird davon ausgegangen, dass enge Kurven, die einer Ausleuchtung bedürfen, nicht befahren werden. Zu diesem Zweck kann dem Steuergerät 5, siehe Figur 4, noch die Fahrgeschwindigkeit v gegeben werden. Weitere Voraussetzung ist natürlich, dass die Abblendlichter über die Lichtquellen 3 auch eingeschalten sind, da ansonsten eine Kurvenausleuchtung nicht sinnvoll ist, und dass keines der Abblendlichter defekt ist. Sichergestellt sein muss auch, dass keine Rückwärtsfahrt vorliegt.

Fig. 5 zeigt ein Diagramm, in dem längs der Abszisse die Fahrgeschwindigkeit in km/h und längs der Ordinate das Zuschalt-Lenkwinkelintervall in Grad aufgetragen ist. Dieses Zuschalt-Lenkwinkelintervall, das durchlaufen werden muss, bis eine nachfolgende Lichtquelle zugeschalten wird, ändert sich ersichtlich in Abhängigkeit der gefahrenen Ist-Geschwindigkeit. Im gezeigten Beispiel beträgt das Zuschalt-Lenkwinkelintervall bei einer Geschwindigkeit ≤ 10 km/h konstant 70°. Bei einer Geschwindigkeit zwischen 10 km/h und 70 km/h ändert sich das Zuschalt-Lenkwinkelintervall von 70° auf 150°, wobei hier ein linearer Zusammenhang dargestellt ist. Selbstverständlich ist auch eine nicht-lineare Änderung möglich. Bei einer Geschwindigkeit oberhalb von 70 km/h ist unabhängig von der zunehmenden Geschwindigkeit das Zuschalt-Lenkwinkelintervall konstant auf 150° eingestellt.

Im Betrieb bedeutet dies, dass um so schneller in Bezug auf eine Lenkwinkeländerung zugeschaltet wird, je langsamer die Geschwindigkeit ist. Dies ermöglicht es enge Kurven, die einer relativ schnellen Ausleuchtung bedürfen, und die zwangsläufig mit geringerer Geschwindigkeit befahren werden, auch relativ schnell weiträumig ausleuchten zu können, da die einzelnen Lichtquellen zügig bereits bei geringen Lenkwinkeländerungen zugeschalten werden. Länger gezogene Kurven, die relativ schnell befahren werden, werden entsprechend langsamer ausgeleuchtet, hier erfolgt die Zuschaltung zwangsläufig verzögert.

In entsprechender Weise variiert auch die Geschwindigkeit des Aufdimmens einer zugeschalteten Lichtquelle, also deren Helligkeitszunahme. Auch diese erfolgt um so schneller, je langsamer gefahren wird, je kleiner also das Zuschalt-Lenkwinkelintervall ist. Sofern das Zuschalt-Lenkwinkelintervall und das Helligkeits-Lenkwinkelintervall einander entsprechen, wie in Fig. 3a dargestellt ist, ist die Helligkeit einer Lichtquelle auf 100 % erhöht, wenn eine nachgeschaltete Lichtquelle zugeschalten wird. Fallen die beiden Lenkwinkelintervalle, wie in den Figuren 3b und 3c gezeigt, auseinander, so erfolgt die Bemessung des Helligkeits-Lenkwinkelintervalls in Abhängigkeit des geschwindigkeitsbedingt definierten Zuschalt-Lenkwinkelintervalls, diese stehen also beispielsweise in einem festen Verhältnis zueinander, so dass eine entsprechende Intervallanpassung in Abhängigkeit der Geschwindigkeit erfolgen kann. Sämtliche Anpassungen bzw. Einstellungen übernimmt das in Fig. 4 gezeigte Steuergerät 5, das natürlich über entsprechende Kennlinien oder Kennfelder bzw. Steuerungs- und Berechnungsalgorithmen verfügt.

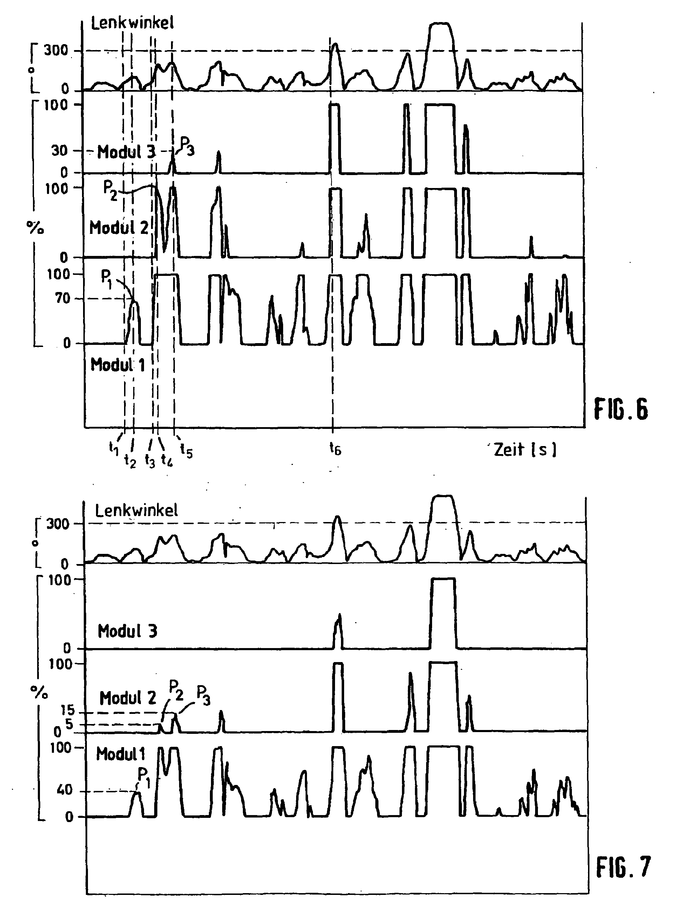

Die Figuren 6 und 7 zeigen zwei Beispiele, wie der Zuschaltbetrieb und die Helligkeitsveränderung in Abhängigkeit des Lenkradwinkels erfolgt.

Längs der Abszisse ist im Beispiel gemäß Fig. 6, dass das Verhalten bei einer Fahrtgeschwindigkeit von 25 km/h zeigt, die Zeit aufgetragen. Die obere Kurve gibt den Verlauf des ermittelten Lenkradwinkels in Grad wieder. Die mit Modul-1, Modul-2 und Modul-3 gekennzeichneten Kurven geben zum einen den Zuschalt-Status an, zum anderen die prozentuale Helligkeit.

Zu Anfang finden nur relativ kleine Lenkradwinkelveränderungen statt, die noch nicht ausreichend sind, dass die erste Lichtquelle zugeschaltet wird. Im Zeitpunkt t₁ jedoch wurde das Lenkrad soweit verdreht, dass die untere Einschaltschwelle überschritten wird. Die erste Lichtquelle wird zugeschaltet, dies zeigt sich im Verlauf der Kurve Modul-1, die ersichtlich ansteigt. Der Lenkradwinkel vergrößert sich bis zum Zeitpunkt t₂. Gleichermaßen steigt die Kurve Modul-1 an, was eine zunehmende Helligkeit bedeutet. Der Lenkwinkel fällt anschließend wieder ab, entsprechend wird die Lichtquelle gemäß der Kurve Modul-1 wieder abgedimmt, die Kurve fällt wieder. Wird der untere Zuschaltschwellwinkelwert wieder unterschritten, wird die Lichtquelle wieder ausgeschaltet.

Im Zeitpunkt t₃ erfolgt eine starke Lenkradwinkelveränderung. Die Lichtquelle 1 wird zugeschalten, sie wird sehr schnell aufgedimmt, wie der steile Anstieg der Kurve Modul-1 zeigt. Diese wird zu 100 % aufgedimmt, der Lenkradwinkel wird aber noch weiter verdreht, das erste Zuschalt-Lenkwinkelintervall ist durchlaufen. Zu diesem Zeitpunkt wird die zweite Lichtquelle, wie durch die Kurve Modul-2, die ansteigt, zugeschaltet. Auch sie dimmt auf annähernd 100 % auf, bedingt durch die entsprechende Lenkradwinkelveränderung. Die maximale Helligkeit der Lichtquelle 2 liegt im Zeitpunkt t₄ an, siehe den Peak P1 der Kurve Modul-2. Anschließend wird wieder etwas zurückgelenkt, die Kurve Modul-2 nimmt ab. Es wird aber der untere Intervallgrenzwert nicht unterschritten, das heißt, die zweite Lichtquelle wird nicht ausgeschaltet. Die erste Lichtquelle leuchtet weiter mit voller Helligkeit.

Eine erneute Lenkradverdrehung führt zu einem erneuten Ansteigen der Kurve Modul-2, das heißt, die Lichtquelle 2 wird erneut stärker aufgedimmt, bis sie zu 100 % leuchtet. Das Lenkrad wird jedoch noch weiter verdreht, so dass es im Zeitpunkt t₅ zum Zuschalten der dritten Lichtquelle kommt, dies zeigt sich durch ein Ansteigen der Kurve Modul-3. Dieses dimmt zu einem gewissen Prozentsatz auf, anschließend wird wieder zurückgelenkt, was zum Ausschalten aller drei Lichtquellen führt.

Entsprechende Lenkwinkeländerungen, die zu einem unterschiedlichen Zuschalten und Aufdimmen der einzelnen Lichtquellen führen, sind ohne weiteres anhand des weiteren Kurvenverlaufs ersichtlich.

Fig. 7 zeigt das Zuschalt- und Aufdimmverhalten ausgehend von derselben Lenkradwinkel-Verlaufskurve, jedoch bei einer Geschwindigkeit von 65 km/h.

Nachdem hier mit höherer Geschwindigkeit gefahren wird, ergibt sich anhand von Fig. 5, dass das Zuschalt-Lenkwinkelintervall deutlich größer ist als bei 25 km/h. Es sei angenommen, dass bei den gezeigten Beispielen das Helligkeits-Lenkwinkelintervall mit dem Zuschalt-Lenkwinkelintervall zusammenfällt, den Diagrammen gemäß den Figuren 6 und 7 liegen jeweils gleiche Verhältnisse zugrunde.

Bereits anhand des in Fig. 6 gezeigten Peaks P1 zeigen sich die hiermit verbundenen Unterschiede. Dieser Peak P1 findet sich auch im Diagramm gemäß Fig. 7 wieder, jedoch ist, nachdem bezogen auf die identische Lenkradwinkeländerung langsamer aufgedimmt wird, die Lichtquelle 1 noch nicht soweit aufgedimmt, wie dies bei langsamerer Fahrt ist. Ersichtlich liegt der Peak P1 deutlich niedriger, nämlich bei ca. 40 %, während der Peak P1 bei ca. 70 % gemäß Fig. 6 liegt.

Bei dem Peak P2, siehe Fig. 6, war die erste Lichtquelle voll aufgedimmt, auch die zweite Lichtquelle wurde mit annähernd 100 % Helligkeit betrieben. Dieser Peak P2 findet sich auch im Diagramm gemäß Fig. 7 wieder, auch hier ist die Lichtquelle 1 voll aufgedimmt. Die Lichtquelle 2 ist jedoch gerade erst zugeschalten worden, sie leuchtet mit einer Helligkeit von ca. 5 %, verglichen mit annähernd 100 % gemäß Fig. 6.

Entsprechend ändern sich auch die Verhältnisse bezüglich des Peaks P3 in Fig. 6, wo die erste und die zweite Lichtquelle voll ausgedimmt sind, die dritte Lichtquelle ist zugeschalten und leuchtet mit ca. 30 %. Dieser Peak P3 findet sich auch in Fig. 7 wieder, jedoch ist hier nur die erste Lichtquelle zu 100 % und die zweite Lichtquelle zu ca. 15 % zugeschaltet, die dritte Lichtquelle wird noch nicht betrieben.

In entsprechender Weise können alle weiteren Peaks in Fig. 6 einem entsprechenden Peak in Fig. 7 zugeordnet werden, jedoch sind die Helligkeitsverhältnisse und Zuschaltverhältnisse deutlich unterschiedlich, nachdem die jeweiligen Lenkwinkelintervalle, die den Zuschalt- und Helligkeitsverlauf bestimmen, zur Situation gemäß Fig. 7 deutlich größer sind als zur Situation gemäß Fig. 6.

## Patentansprüche

1. Kraftfahrzeug mit einer Beleuchtungseinrichtung umfassend ein Steuergerät und ein über das Steuergerät zum Ausleuchten einer Kurve in Abhängigkeit des über einen Lenkwinkelsensor erfassten Lenkwinkels ansteuerbares Leuchtmittel, wobei das Leuchtmittel mehrere Lichtquellen (4a, 4b, 4c) umfasst, die in unterschiedliche Richtungen (Pa, Pb, Pc) ausgerichtet sind und unterschiedliche, einander ergänzende Bereiche ausleuchten, und die über das Steuergerät (5) in Abhängigkeit des Lenkwinkels zeitlich nacheinander zuschaltbar sind, wobei das Steuergerät (5) für ein Variieren der Helligkeit einer zugeschalteten Lichtquelle (4a, 4b, 4c) von einer minimalen zu einer maximalen Helligkeit in Abhängigkeit des erfassten Lenkwinkels ausgebildet ist,
**dadurch gekennzeichnet,**
**dass** das Steuergerät (5) zum Variieren des zum Zuschalten einer nachfolgenden Lichtquelle (4a, 4b, 4c) zu durchlaufenden Lenkwinkelintervalls und des zum Verändern der Helligkeit zu durchlaufenden Lenkwinkelintervalls in Abhängigkeit der Ist-Geschwindigkeit ausgebildet ist.

2. Kraftfahrzeug nach Anspruch 1,
**dadurch gekennzeichnet,**
**dass** das Steuergerät (5) zum Variieren des zu durchlaufenden Lenkwinkelintervalls innerhalb eines vorbestimmten Geschwindigkeitsintervalls ausgebildet ist.

3. Kraftfahrzeug nach Anspruch 2,
**dadurch gekennzeichnet,**
**dass** das Geschwindigkeitsintervall 5-90 km/h, insbesondere 10-70 km/h beträgt.

4. Kraftfahrzeug nach einem der vorangehenden Ansprüche,
**dadurch gekennzeichnet,**
**dass** das Lenkwinkelintervall, das für das Zuschalten einer weiteren Lichtquelle (4b, 4c) durchlaufen werden muss, 50°-170°, insbesondere 70°-150° beträgt.

5. Kraftfahrzeug nach einem der vorangehenden Ansprüche,
**dadurch gekennzeichnet,**
**dass** das Steuergerät (5) zur linearen oder nichtlinearen Änderung des Lenkwinkelintervalls in Abhängigkeit der Fahrzeuggeschwindigkeit ausgebildet ist.

6. Kraftfahrzeug nach einem der vorangehenden Ansprüche,
**dadurch gekennzeichnet,**
**dass** das für eine Helligkeitsänderung von der minimalen zur maximalen Helligkeit zu durchlaufende Lenkwinkelintervall stets gleich dem für das Zuschalten der nachfolgenden Lichtquelle (4a, 4b, 4c) zu durchlaufenden Lenkwinkelintervall oder größer oder kleiner, jedoch in einem festen Verhältnis zueinander stehend, als das für das Zuschalten der nachfolgenden Lichtquelle (4a, 4b, 4c) zu durchlaufende Lenkwinkelintervall ist.

7. Kraftfahrzeug nach einem der vorangehenden Ansprüche,
**dadurch gekennzeichnet,**
**dass** der für das Zuschalten der ersten Lichtquelle (4a) zu erreichende Lenkwinkel zwischen 50° und 90°, insbesondere 70° beträgt.

8. Kraftfahrzeug nach einem der vorangehenden Ansprüche,
**dadurch gekennzeichnet,**
**dass** drei oder mehr Lichtquelle (4a, 4b, 4c) vorgesehen sind, deren primäre Abstrahlrichtungen unter einem Winkel von 15° bis 25°, insbesondere von 20° zueinander stehen.

9. Kraftfahrzeug nach Anspruch 8,
**dadurch gekennzeichnet,**
**dass** der Öffnungswinkel des abgestrahlten Lichtkegels (La, Lb, Lc) zwischen 20° und 35°, insbesondere zwischen 25° und 30° beträgt.

10. Kraftfahrzeug nach einem der vorangehenden Ansprüche,
**dadurch gekennzeichnet,**
**dass** eine Lichtquelle (4a, 4b, 4c) eine oder mehrere LED's aufweist, wobei die mehreren LED's als Modul gemeinsam ansteuerbar sind.

## Claims

1. Motor vehicle with a lighting device comprising a control device and a lighting device for illuminating a curve, which is controlled by the control device depending on the steering angle detected by a steering sensor, wherein the lighting device comprises a plurality of light sources (4a, 4b, 4c) which are oriented in different directions (Pa, Pb, Pc) and illuminate different mutually supplementing regions and which can be switched on sequentially one after another by means of the control device (5) depending on the steering angle, wherein the control device (5) is configured in order to vary the brightness of a switched-on light source (4a, 4b, 4c) from a minimum to a maximum brightness depending on the steering angle detected, **characterised in that** the control device (5) is configured for varying the steering angle interval to be passed through for switching on a next light source (4a, 4b, 4c) and for varying the steering angle interval to be passed through for altering the brightness, depending on the actual speed.

2. Motor vehicle according to claim 1, **characterised in that** the control device (5) is configured for varying the steering angle to be passed through within a predetermined speed interval.

3. Motor vehicle according to claim 2, **characterised in that** the speed interval is 5km/h to 90 km/h and particularly 10 km/h to 70 km/h.

4. Motor vehicle according to one of the preceding claims, **characterised in that** the steering angle interval that must be passed through for switching on a further light source (4b, 4c) is 50° to 170° and in particular 70° to 150°.

5. Motor vehicle according to one of the preceding claims, **characterised in that** the control device (5) is configured for linear or non-linear alteration of the steering angle interval depending on the vehicle speed.

6. Motor vehicle according to one of the preceding claims, **characterised in that** the steering angle interval to be passed through for a brightness change from the minimum to the maximum brightness is always equal to that for the switching on of the next light source (4a, 4b, 4c) or is larger or smaller, though in a fixed ratio to one another, than the steering angle interval to be passed through for switching on the next light source (4a, 4b, 4c) .

7. Motor vehicle according to one of the preceding claims, **characterised in that** the steering angle to be reached for the switching on of the first light source (4a) is in the range of 50° to 90°, in particular 70°.

8. Motor vehicle according to one of the preceding claims, **characterised in that** three or more light sources (4a, 4b, 4c) are provided whose primary beam directions lie at an angle in the range of 15° to 25°, in particular 20°, to one another.

9. Motor vehicle according to claim 8, **characterised in that** the beam angle of the light cone (La, Lb, Lc) emitted is in the range of 20° to 35° and in particular 25° to 30°.

10. Motor vehicle according to one of the preceding claims, **characterised in that** a light source (4a, 4b, 4c) has one or more LEDs, wherein the plurality of LEDs are controllable together as a module.

## Revendications

1. Véhicule avec un dispositif d'éclairage comportant un dispositif de commande et un moyen d'éclairage pouvant être commandé par le dispositif de commande pour bien éclairer un virage en fonction de l'angle de braquage détecté par un capteur d'angle de braquage, le moyen d'éclairage comportant plusieurs sources lumineuses (4a, 4b, 4c) qui sont dirigées dans différentes directions (Pa, Pb, Pc) et éclairent bien différentes zones se complétant mutuellement et qui peuvent être mises en circuit les unes après les autres dans le temps par le dispositif de commande (5) en fonction de l'angle de braquage, le dispositif de commande (5) étant conçu pour varier la luminosité d'une source lumineuse (4a, 4b, 4c) mise en circuit d'une luminosité minimale à une luminosité maximale en fonction de l'angle de braquage détecté,
**caractérisé en ce que**
le dispositif de commande (5) est conçu pour varier l'intervalle d'angle de braquage à parcourir pour mettre en circuit une source lumineuse (4a, 4b, 4c) suivante et pour varier l'intervalle d'angle de braquage à parcourir pour modifier la luminosité en fonction de la vitesse réelle.

2. Véhicule selon la revendication 1, **caractérisé en ce que**
le dispositif de commande (5) est conçu pour varier l'intervalle d'angle de braquage à parcourir à l'intérieur d'un intervalle de vitesse prédéfini.

3. Véhicule selon la revendication 2, **caractérisé en ce que**
l'intervalle de vitesse est situé entre 5 à 90 km/h, en particulier entre 10 et 70 km/h.

4. Véhicule selon l'une quelconque des revendications précédentes, **caractérisé en ce que**
que l'intervalle d'angle de braquage, qui doit être parcouru pour la mise en circuit d'une source lumineuse (4b, 4c) supplémentaire, est situé entre 50° et 170°, en particulier entre 70° et 150°.

5. Véhicule selon l'une quelconque des revendications précédentes, **caractérisé en ce que**
le dispositif de commande (5) pour la modification linéaire ou non linéaire de l'intervalle d'angle de braquage est conçu en fonction de la vitesse du véhicule.

6. Véhicule selon l'une quelconque des revendications précédentes, **caractérisé en ce que**
l'intervalle d'angle de braquage à parcourir pour une modification de luminosité de la luminosité minimale à la luminosité maximale est toujours identique à l'intervalle d'angle de braquage à parcourir pour la mise en circuit de la source lumineuse (4a, 4b, 4c) suivante, ou supérieur ou inférieur à l'intervalle d'angle de braquage à parcourir pour la mise en circuit de la source lumineuse (4a, 4b, 4c) suivante, mais avec un rapport fixe entre lesdits intervalles.

7. Véhicule selon l'une quelconque des revendications précédentes, **caractérisé en ce que**
l'angle de braquage à atteindre pour la mise en circuit de la première source lumineuse (4a) est situé entre 50° et 90°, en particulier à 70°.

8. Véhicule selon l'une quelconque des revendications précédentes, **caractérisé en ce**
**qu'**il est prévu trois sources lumineuses (4a, 4b, 4c) ou plus dont les directions d'orientation primaires présentent entre elles un angle de 15° à 25°, en particulier de 20°.

9. Véhicule selon la revendication 8, **caractérisé en ce que**
l'angle d'ouverture du cône de lumière rayonnée (La, Lb, Lc) est situé entre 20° et 35°, en particulier entre 25° et 30°.

10. Véhicule selon l'une quelconque des revendications précédentes, **caractérisé en ce que**
une source lumineuse (4a, 4b, 4c) comporte une ou plusieurs diodes électroluminescentes, en sachant que plusieurs diodes électroluminescentes peuvent être commandées ensemble en tant que module.
